(19) Europäisches Patentamt / European Patent Office / Office européen des brevets

(11) **EP 1 785 802 A1**

(12) **EUROPEAN PATENT APPLICATION**

(43) Date of publication:
**16.05.2007 Bulletin 2007/20**

(51) Int Cl.:
*G06F 1/10* (2006.01)  *H04J 3/06* (2006.01)

(21) Application number: **05024534.9**

(22) Date of filing: **10.11.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (72) Inventor: **Fiedler, Ulrich**<br>**8400 Winterthur (CH)**<br><br>(74) Representative: **Kley, Hansjörg**<br>**Siemens AG**<br>**Postfach 22 16 34**<br>**80506 München (DE)** |
| (71) Applicant: **ETH Zürich,**<br>**ETH Transfer**<br>**8092 Zürich (CH)** | |

(54) **Method for frequency synchronization**

(57) A popular way to achieve frequency synchronization between devices (2, 3) over a packet-switched network (1) is by time stamping packets upon sending and receiving and analyzing sequences of time stamps at the receiver's side. The proposed invention gives a method to compute continuous accurate estimates of the frequency difference of sender and receiver clock as required e.g, in TDM circuit emulation over packet-switched networks (1). The essence of the invention is to segregate effects from clock frequency deviation from network dynamics. This segregation is achieved by estimating the minimal delay of the transmission over the network (1) from sequences of time stamps pairs. The method considers a history ($h_n$) of tuples (m, d) associated with packets. A tuples (m, d) consist of packet number (m) and difference (d) of receiver time and sender time. The method then successively upgrades the lower convex hull on a small superset of the tuples (m, d) in the history when new packets arrive. The method estimates the clock frequency difference by computing a «tangent» to this hull, i.e. by solving the associated linear programming on the superset. We denote that only the data of the hull needs to be kept in the memory of the receiver and not the full history data.

Fig 5

EP 1 785 802 A1

**Description**

This invention relates to a method for frequency synchronization according to the preamble of claim 1.

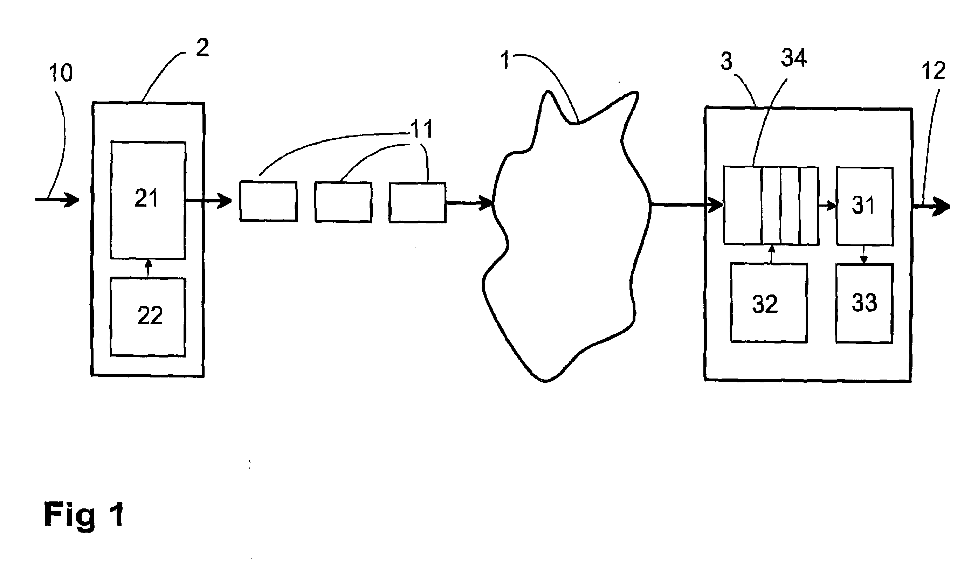

Selected applications such as connecting base stations and PBX over packet switched networks (Gigabit Ethernets, etc.) require frequency synchronization with high accuracy across a packet-switched network. This accuracy is required to prevent long term under- or overflow of receiver buffer during weeks or month. A global view of involved components is depicted in figure 1. Two TDM networks 10 and 12 are to be connected across a packet-switched network 1. To achieve the connection, the TDM signal 10 is packetized at a constant send frequency 22, e.g. into Ethernet frames 11. Due to variable packet transmission delays in packet-switched networks 1, packets 11 need to be buffered in a receiver buffer 34. To prevent buffer under or overflow, the buffer play-out frequency needs to be equal to the send frequency. Thus, the clock 32 that controls the play-out rate needs to be synchronized with sender's clock 22. Usually, this frequency synchronization is achieved by time stamping packets upon sending and receiving, plus estimating 33 the difference of sender and receiver clock by analyzing sequences of time stamps. In the following context of this document the term «frame» will be replaced or is always understood by the more general term «packet»; e.g. IP-packet, ATM cell, Ethernet Frame, etc.

The scope of IEEE 1588 [5] is a standard for a precision clock synchronization protocol for networked measurement and control systems. This standard defines a framework, in which vendors can differentiate by providing different algorithms and mechanisms that can interoperably be used to synchronize systems. Applications within the scope of IEEE 1588 are or are expected in:

- Telecommunication,
- Industrial and Motion Control and
- Test and Measurement.

In WO 2004/014003 A1 [2] a method and an apparatus for recovering a reference clock is disclosed. This method requires complex components as phase locked loops and filters. However, PLL-based methods are known to be not suitable for packet-switched networks 1 in which the variability of packet delays is high, i.e. is significantly larger than the time elapsed between successive packet send events.

In US 6,551,810 B1 [1] a method for a clock skew estimation is proposed. The methods employs linear programming. The input of the method are N previously known pairs of sender and receiver time stamps. The time complexity is of order O(N). The disclosed algorithm is robust in the sense that the error margin of the estimate for the frequency difference independent of the magnitude of the frequency difference itself. A further description of US 6,551,810 B1 [1] is given in the paper «Estimation and Removal of Clock Skew from Network Delay Measurements» [3]. Details of the linear programming such as how to compute the lower convex hull and how to minimize the sum of the L1 distances are not specified.

Thus, without considerable modifications and refinements, this method according to the teachings of Skelly et al. [1] is not well suited for applications such as connecting base stations which require synchronization across packet-switched networks at repeated intervals in real time on low cost devices. Most notably, continuous computations of the synchronization on largely overlapping groups of N previously known differences of sender and receiver time stamps is not efficient.

In Paxon's Ph.D. thesis [4] a method for a clock skew estimation is provided which is based on grouping N previously known one-way delay measurements into bins («denoising») and estimating the skew from these minima by employing linear regression. Since linear regression is a L2 technique requiring operations of order 2 (quadratic) and therefore floating point arithmetic is need. Floating point arithmetic units are not suitable for low cost devices.

The task of the present invention is, to provide a method for frequency synchronization at high accuracy over packet-switched networks such as e.g. metropolitan Gigabit Ethernets at repeated intervals in real time.

This task is achieved by a method according to the features given in claim 1.

A constant difference between the sender clocks $f_s$ and receiver clocks $f_r$ (syn. clock frequencies) within a limited time interval is made as a basic prerequisite for this invention; this constant difference can easily expressed in a linear function by

$$f_r = f_s \cdot z$$

where z is a constant.

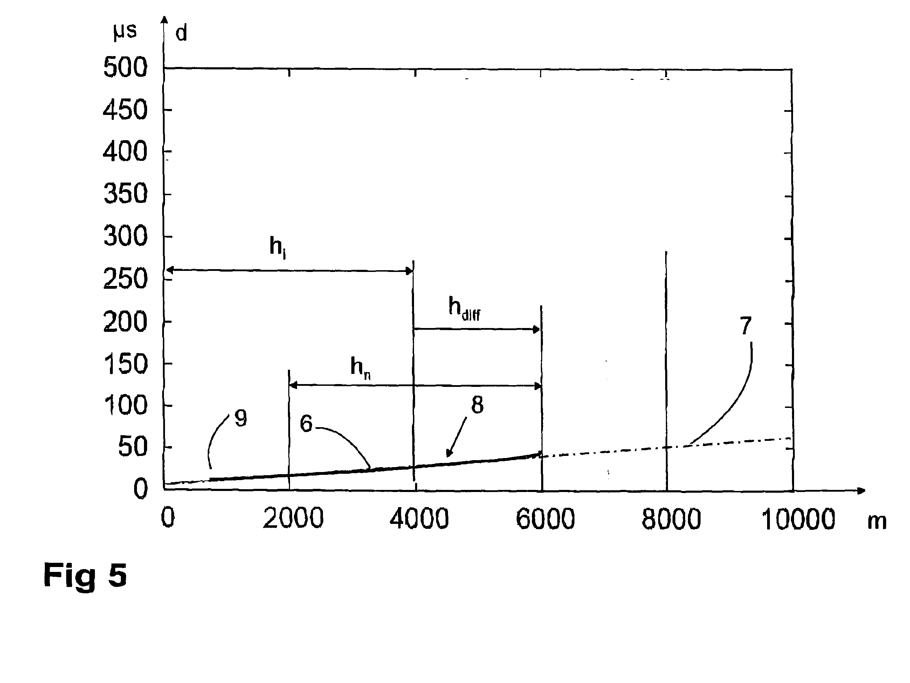

The invention is summarized as follows together with figure 5; The essence is to segregate effects from clock frequency deviation from network dynamics. This segregation is achieved by estimating or determining the minimal delay of the transmission over the network from sequences of time stamps pairs. The method considers a history $h_n$ of tuples (m, d) associated with packets. A tuple (m, d) consists of a packet number m and a difference d of receiver time and sender time. The method then successively upgrades the lower convex hull on a small superset of the tuples (m, d) in the history when new packets arrive. The method estimates the clock frequency difference by computing a «tangent» to this hull or a piecewise spline, i.e. by solving the associated linear programming on the superset. We denote that only the data of the hull needs to be kept in the memory of the receiver and not the full history data with all the tuples.

We denote that only operations of order L1 are performed which usually does not require a floating point arithmetic units. This enables repeated synchronization in real time and is especially suitable for low cost devices.

According to a preferred embodiment of the invention, the receiving device solely keeps a history of the lower convex hull of the sender and receiver time stamp pairs to minimize the cost for repeated computation of the linear programming. Moreover, the invention proposes to continuously adjust the convex hull by inner elimination when the history needs to be shifted in time due to addition of further pairs of sender and receiver time stamps which are caused by reception of further packets.

Finally, an algorithm such as the Simplex algorithm is repeatedly employed every time a skew estimation is required.

The invention will become apparent upon consideration of the following detailed description of a specific embodiment thereof with a reference to a drawing in which:

figure 1    overview of the involved components connecting two TDM-networks over a packet network;
figure 2    representation of network dynamics, i.e. packet delay vs. packet sequence in a packet-switched network;
figure 3    representation of network dynamics and clock skew, i.e. difference of sender and receiver time stamp vs. packet sequence number;
figure 4    overview of the starting or initial phase of the proposed synchronization method;
figure 5    normal operation of the proposed synchronization method based on a history;
figure 6    illustration in detail of the re-computation of the convex hull in the proposed method when the history is shifted in time.

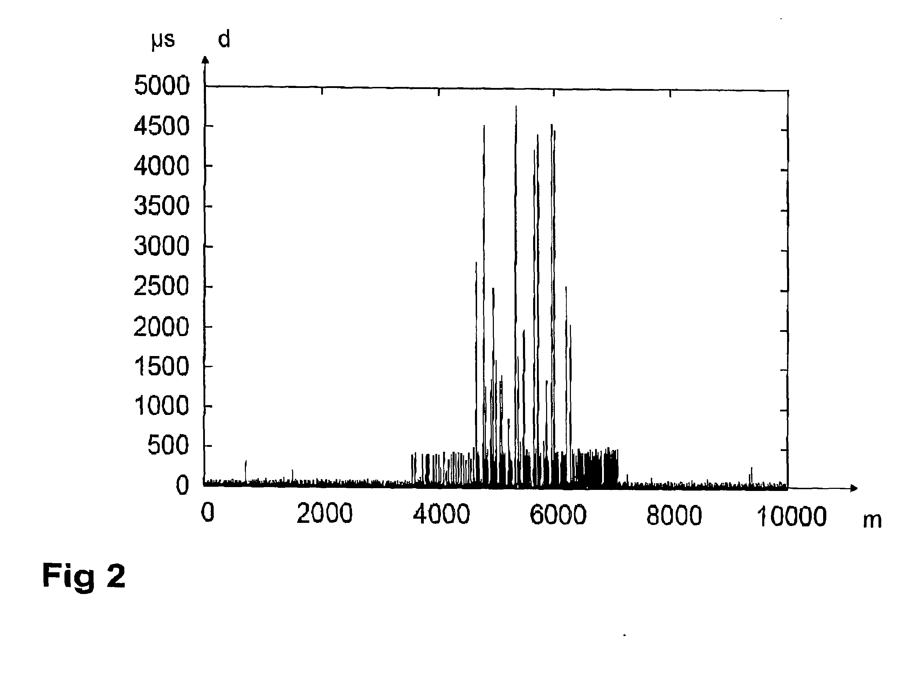

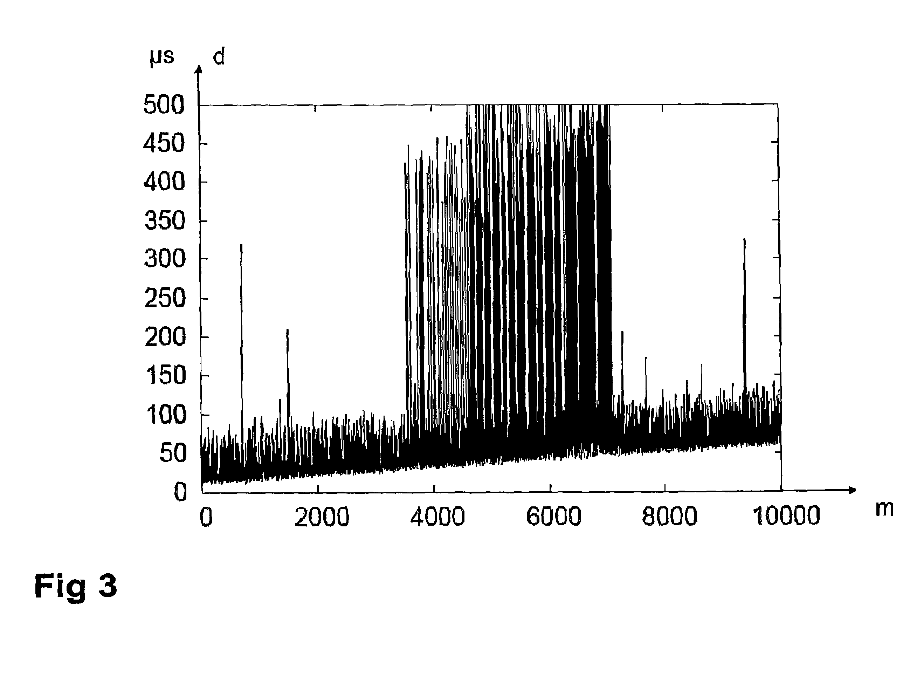

Before describing a preferred embodiment of the present invention the background and the underlying problems are introduced with the representations given in figure 2 and 3.

Figure 2 depicts a representation of network dynamics in packet-switched network, i.e. a sequence of 10000 packet delays from a network probing measurement. These delays do not account for clock skew.

Figure 3 depicts a representation of network dynamics and clock skew and offset, i.e. the difference of sender and receiver time stamp vs. sequence number. We denote that the y-axis is rescaled compared to fig. 2. The before mentioned difference is a sum of network delay and time difference due to clock skew and clock offset. The clock skew in this figure is 50 μs per 10000 packets. We denote that this large value for skew has been chosen for illustration purposes only. However, the representation underlies the following background: The x-axis - denoted by m - represents either the sequence number m of packets if packets have equal size. In the general case, where packets may have unequal packet size, the sequence number may be replaced with the sender timestamp. The y-axis denoted by d represents the sum of network delay d and difference due to clock skew and offset calculated by subtracting the sender time stamp from the receiver time stamp of each frame. The linear increase in the minimal time stamp difference is the consequence of the skew between the sender and receiver clocks. The fact that the clock skew within the scope of the history can be reasonably represented by a linear relation is made a basic assumption underlying this invention:

$$f_r = f_s \cdot z$$

where
$f_r$ frequency of the receiver;
$f_s$ frequency of the sender;
z a constant.

This assumption is usually called the simple skew model. In this example, the receiver clock is faster than the sender clock. In the context of this paper, not always a proper distinction between the terms clock and frequency is made. However, this does not impact the technical content of this paper; clock skew and frequency skew do not differ in the meaning.

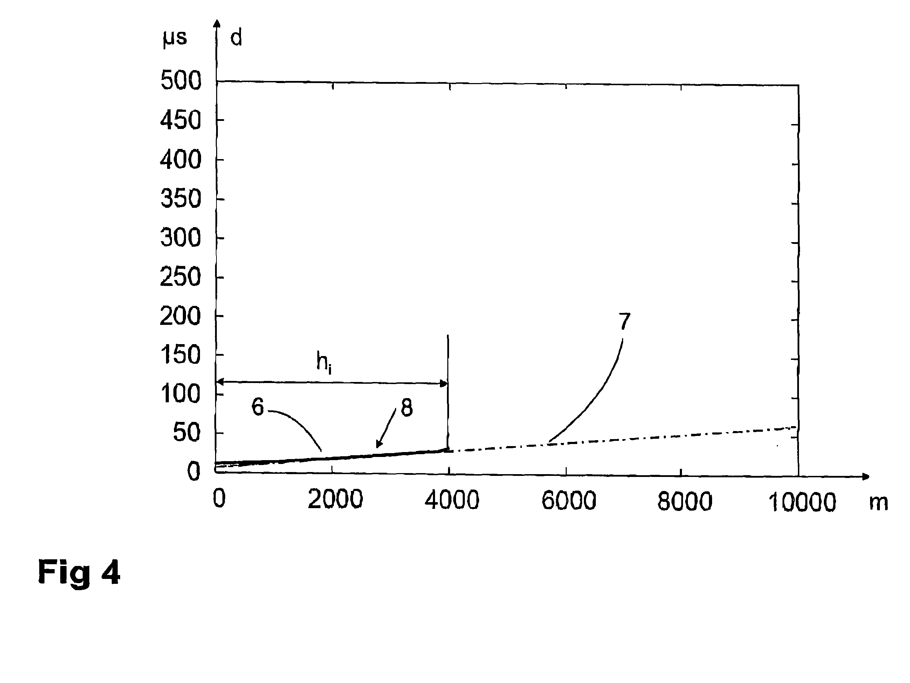

Figure 4 depicts the initial phase of the method for frequency synchronization and shows the result of computation of the lower convex hull to the tuples of time stamp difference and sequence number as depicted in figure 3: inference of clock skew from a tangent to the hull. The method for frequency synchronization starts as follows:

We consider a history that defines a scope for the estimation of the clock skew. This history may then moving in time as new packets are received. In figure 4, the size of this history is set to the last 4000 packets. The method thus considers the last 4000 tuples (m, d) of packet sequence number and time stamp difference, i.e. difference receiver time stamp minus sender time stamp.

We start with filling up the full moving history with the data of the lower convex hull to the 4000 initial lower frame delay values. This hull is successively computed by inner elimination. In detail, figure 4 depicts:

- the lower convex hull 6 to the tuples/points associated with the packet sequence number 1..4000 of the first 4000 frames depicted in figure 3.
- the tangent 7 to the hull 6 that minimizes the sum of the distances in L1 metric between tangent 7 and the tuples.
- The arrow 8 depicts the intersection point of tangent 7 and hull 6.
- The clock skew can then directly be inferred from the slope of this tangent 7 that is the angle between tangent 7 and x-axis denoted by m.

Instead of the sequence number m the tuple (m, d) the send time stamp can be used. Alternatively the terms «frame number» or

«packet number» or

«frame index» or

«cell number» may also used.

Moreover, we denote that only the data of the hull is stored and not the full set of i tuples (m, d). This optimizes storage consumption. In the worst case, sqrt (i) tuples (m, d) are to be kept participating in the hull out of a basic set of i tuples (m, d).

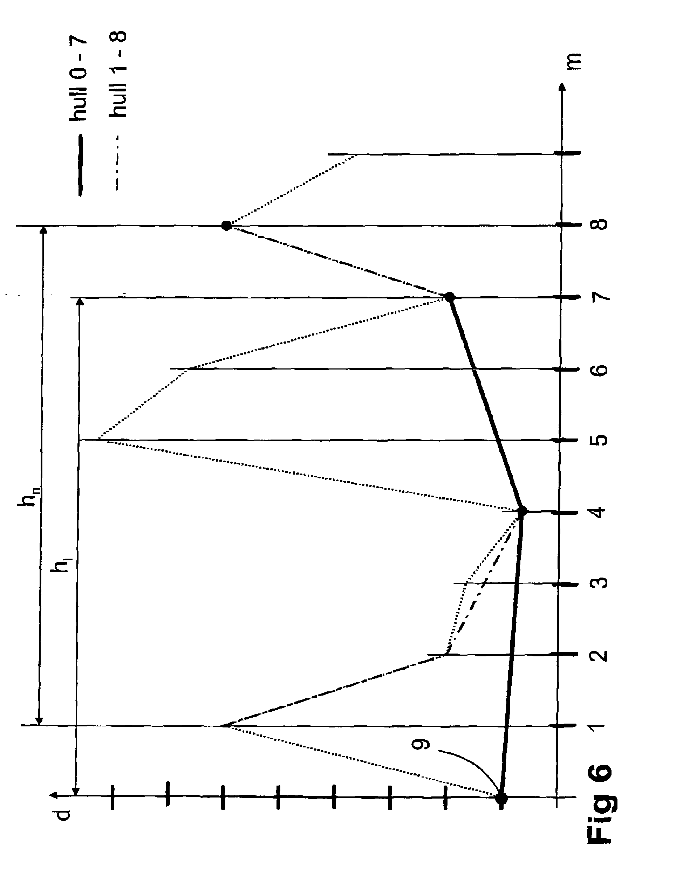

Figure 5 illustrates the normal operation of the algorithm which is based on a history $h_n$ which is moving in time. Figure 5 shows the result of re-computation of the convex hull on a superset of the shifted history after shifting figure 4's history in time and re-computation of the tangent 7. It is assumed that 6000 frames were now received. To minimize storage consumption of the method, the data associated with the convex hull of the first 2000 packets, that is 2000 tuples (m, d) have now been removed as the history has moved except one «base point» 9 (see figure 6 and related text for a detailed explanation). The lower convex hull has successively been extended to accommodate newly received packets 11.

In detail figure 5 depicts:

- The lower convex hull 6 of the tuples (m, d) associated with packet number 2000 to packet number 6000 depicted in figure 3 beginning with the base point 9 and ending at the tuple associated with packet number 6000;
- the linear programming is then solved by computing the tangent 7 to the lower convex hull 6 that minimizes the sum of the distances between tangent 7 and the tuples/points within base point 9 and the tuple associated with packet number 6000 which is a superset of the current history.
- the arrow 8 depicts were the tangent 7 intersects the hull 6;
- the clock skew can directly be inferred from the slope of this tangent 7, that is angle between tangent 7 and x-axis denoted by m.

In full detail the underlying method is explained in figure 6. For illustration purpose, we assume a very short history of 8 packets. According to figure 6 the initial history goes from packet number m=0 to packet number m=7. The associated lower convex hull is given with the tuples $(0, d_0)$, $(4, d_4)$, $(7, d_7)$. Now, after receiving the next packet, we move the history by one tuple, i.e. the history now goes from packet number m=1 to packet number m=8. Then the associate lower convex hull would be given with the tuples $(1, d_1)$, $(2, d_2)$, $(4, d_4)$, $(7, d_7)$, $(8, d_8)$. By computing this new hull we would have to remove $(0, d_0)$ and add $(1, d_1)$, $(2, d_2)$ in addition to the tuple $(8, d_8)$ associated with the newly incoming packet. This correction of the lower hull at the left side of the history is costly in processing. Therefore, we keep the last tuple/point of the hull that is associated with a packet sequence number smaller or equal than the left edge of the history. This point is the base point 9. Starting to compute the hull from this base point 9 keeps us in line with the big picture, i.e, with computing a fraction of the hull associated with an infinitely large history. In far the most cases this optimization has no impact on computing the tangent 7 which likely meets the hull somewhere in the middle of the history.

Moreover, we denote that arbitrary shifts $h_{diff}$ of the history are possible and preferred in certain applications. In these cases the lower convex hull 6 does not need to be recomputed in the area of overlap of histories before and after shift as depicted in figure 5 for the area between packet number 4000 to 6000. It has to be understood, that the shift $h_{diff}$ according to figure 5 and 6 represents only examples, their size has to be adopted to the actual application.

On the following pages we show model C-code that implements the above mentioned steps of an preferred embodiment of the present invention.

```
/* Synchonization Framework sync_board_STANDALONE.c */

#include <stdlib.h>

/* Definitions */

/* NOTE: time is given in ticks of the clock, 32688 ticks == 1 ms */

// testing parameters
#define SAMPLES          20000    /* # samples for testing
#define SEND_INTERVAL    32688    /* send interval for testing (==1ms)*/
#define MEAN_DELAY       32688    /* mean delay for testing (==1ms)*/
#define DROP_RATIO       10000    /* probability to drop a packet 1:x */
#define SKEW            0.00005   /* skew between sender and receiver stamp
                                     for testing, by specification limited
                                     to 20ppm */
#define SEED              1234       /* seed for testing */


// sync_board traces
#define TRC_INPUT           0
#define TRC_HULL            0
#define TRC_DEBUG           0


// sync_board parameters
#define RUN_FRACTION       1000  /* # frames until resync */
#define HISTSIZE           2000  /* # frames to consider when syncing */
#define HALFHISTSIZE   HISTSIZE/2  /* half of previous number
                                      for use in simplex */
```

```c
/* NOTE:  the history is an archive of time stamps from the last received
packets  the defined constant HISTSIZE stands for the amount of time
stamps in this history  */

/* @@@@@@@@@@@@@@@@@@@@@@@@@@@  @@@@@@@@@@@@@@@@@@@@@@@@@@@@@@@@@ */
/* Type Definitions */

typedef struct { /* the convex hull is composed of tangents that are
stored in a stack */
        unsigned int    x;       /* sequence number */
        unsigned int    y;       /* frame delay */
        int     dy;      /* delta delay to predecessor */
        int     dx;      /* delta seq. num. to predecessor */
} Point;

typedef struct { /* sliding stack to keep the lower convex hull data */
        Point p[HISTSIZE];
        unsigned int head; /* index of the head element (closest to left
edge of history) */
        unsigned int num;   /* number of elements in the stack */
} ConvHullSlidStack;


/* @@@@@@@@@@@@@@@@@@@@@@@@@@@@  @@@@@@@@@@@@@@@@@@@@@@@@@@@@@@@@@ */
/*  Static Functions  */

static inline unsigned int toBufIndex(const unsigned int head, const
unsigned int i) { return (((head + i)  >= HISTSIZE) ? (head + i -
HISTSIZE) : (head + i)); }
static inline unsigned int nextBufIndex(const unsigned int k) { return
(((k+1) >= HISTSIZE) ? (k+1-HISTSIZE) : (k+1)); }
static inline unsigned int prevBufIndex(const unsigned int k) { return
((k <= 0) ? (HISTSIZE-1) : (k-1)); }


/* @@@@@@@@@@@@@@@@@@@@@@@@@@@@  @@@@@@@@@@@@@@@@@@@@@@@@@@@@@@@@@ */
/* Global Variables  */

int sync_board_reset = 1; /* reset the algorithem when starting */
int sync_board_run_first = 1+HISTSIZE/RUN_FRACTION; /* don't run the
algorithem until the history is full */

unsigned int sync_board_push_counter = 0; /* how many value pairs have
been hand over to the algorithem */
```

```
static ConvHullSlidStack convHull; /* allocate a convHull */

Point pt; /* point incl. tangent that contains result of simplex algo */
Point pt_last;


/* @@@@@@@@@@@@@@@@@@@@@@@@@@  @@@@@@@@@@@@@@@@@@@@@@@@@@@@@@@ */
/* auxiliary fcts for testing
   dbg function to dump the stack that contains the Points of the convex
hull
   */


void convHullTrc(ConvHullSlidStack *ch) {
        int i,k;

        printf("-- dump conv hull (%10d values) \n",ch->num);
        for (i=0; i< ch->num; i++) {
                k = toBufIndex(ch->head, i);
                printf("%5d:
k:%5d\tx:%10u\ty:%10u\tdx:%10u\tdy:%10u\tdy/dx: %16.2f\n",
                        i,k,ch->p[k].x, ch->p[k].y, ch->p[k].dx, ch-
>p[k].dy, (double)ch->p[k].dy/ch->p[k].dx);
        }
        return;
}


/* @@@@@@@@@@@@@@@@@@@@@@@@@@  @@@@@@@@@@@@@@@@@@@@@@@@@@@@@@@ */
/*
 * fcts to slide the history (currently unused)
 * pop the head to slide convHull *
 */

void convHullPopHead(ConvHullSlidStack *ch) {
        /* only pop if sliding stack contains more than 2 elements */
        if (ch->num > 2) {
                ch->head = nextBufIndex(ch->head);
                ch->num--;
        }
        return;
}


/* @@@@@@@@@@@@@@@@@@@@@@@@@@  @@@@@@@@@@@@@@@@@@@@@@@@@@@@@@@
/*
 * fcts to establish the lower convex hull and to determine the tangent
```

```
*/

void convHullPush1st(ConvHullSlidStack *ch, unsigned int x, unsigned int
y) {
        /* push the 1st Point on the conv hull sliding stack */

        #if TRC_DEBUG
            printf("sync_board --- x %d y %d\n",x,y);
        #endif

        ch->p[0].x  = x;
        ch->p[0].y  = y;
        ch->p[0].dx = 0; /* by definition */
        ch->p[0].dy = 0;
        ch->head = 0;
        ch->num=1;

        return;
}


void convHullPushNext(ConvHullSlidStack *ch, unsigned int x, unsigned int
y) {
        /* push a Point on the conv hull sliding stack      */
        /* then iteratively remove all pts from the stack   */
        /*    that do no longer participate in the lower     */
        /*    convex hull */

        int tail;      /* buffer index of tail "insert on tail" */
        int pred;      /* buffer index of preceeding Point */
        Point predPt; /* the preceeding Point itself */
        int dx, dy;    /* differential of new tentative tangent */

        /* assertations */
        if (ch->num == 0) {
                printf("convHullPushNext -- sliding stack empty - use
convHullPush1st\n");
                exit(1);
        }
        if (ch->num >= HISTSIZE) {
                printf("confHullPushNext -- conv hull stack full -
something wrong with sliding \n");
                exit(1);
        }
```

```
/* 2nd pt of hull must be inside the history after sliding
   if not drop head to slide the history */
if ((ch->num >= 2) &&
    (ch->p[toBufIndex(ch->head,1)].x <= (x - HISTSIZE + 2))) {
        ch->head = nextBufIndex(ch->head);
        ch->num--;
}


/* inner elimination (see Sedgewick ch. 24)*/
pred      = toBufIndex(ch->head,ch->num - 1);
predPt    = ch->p[pred];
dx        = x - predPt.x; /* differential of new tentative tangent
*/
dy        = y - predPt.y;


while ((ch->num > 2) &&
       (dy * predPt.dx < predPt.dy * dx) ) {

        pred            = prevBufIndex(pred);
        predPt          = ch->p[pred];
        dx              = x - predPt.x;
        dy              = y - predPt.y;
        ch->num--;
}

#if TRC_DEBUG
    printf("sync_board --- x %d y %d\n",x,y);
#endif

/* finally push the new Point on the stack */
tail = nextBufIndex(pred);
ch->p[tail].x  = x;
ch->p[tail].y  = y;
ch->p[tail].dx = dx; /* differential for tentative tangent */
ch->p[tail].dy = dy; /* to preceeding Point */
ch->num++;


return;
}


int convHullSimplex(const ConvHullSlidStack *ch, unsigned int lastSeqnr,
Point *p) {
    /* this assumes that simplex is only called for a full history */
```

```
        int minX =  lastSeqnr - HALFHISTSIZE;

        /* search stack from top for last Point with x > minX */
        int r = ch->num - 1;
        int l = 0;
        int m;

        /* assertations */
        if (ch->num < 2) {
                printf("convHullSimplex -- simplex needs min. 2 pts in
conv hull\n");
                exit(1);
        }
        if ((ch->p[toBufIndex(ch->head,1)]).x <= (lastSeqnr - HISTSIZE +
1)) {
                printf("confHullSimplex -- 2nd pt in hull must be inside
the history\n");
                exit(1);
        }

        do {
                m = (l+r) >> 1;
                // assertation:
                if (ch->p[toBufIndex(ch->head,m)].x > minX) {
                        r=m;
                }
                else {
                        l=m;
                }
        } while (l+1<r);
        *p = ch->p[toBufIndex(ch->head,r)]; /* take right side as
solution since minX=floor(..) */

        /* check if difference of x value of first and last point in hall
are larger then the half history */
        if ((ch->p[toBufIndex(ch->head,ch->num-1)].x - ch-
>p[toBufIndex(ch->head,0)].x) < HALFHISTSIZE)
                return 0;
        else
                return 1;
}


/* @@@@@@@@@@@@@@@ sync_board @@@@@@@@@@@@@@@@@@@@@@@@@@@@@@@ */

int sync_board(unsigned int seq_nr, unsigned int recv_stamp) {
```

```
        /*
         * INPUT
         * seq_nr: is the sequence number of the packet -> this is a
logical time stamp
         * recv_stamp: time stamp on the reciver board
         */


        int i,k;


        #if TRC_INPUT
            printf("sync_board input -- seqnr: %10u\trecv_stamp: %10u\t \n",
seq_nr, recv_stamp);
        #endif


        /* reset convex hull if necessary */
        if (sync_board_reset) {
            sync_board_reset = 0;
            sync_board_push_counter=1;
            convHullPush1st(&convHull, seq_nr, recv_stamp);
        } else {
            sync_board_push_counter++;
            convHullPushNext(&convHull, seq_nr, recv_stamp);
        }


        /* calculate board sync */
        if (0 == sync_board_push_counter % RUN_FRACTION) {
            /*
             * NOTES
             * wrap arounds are not handled in this code, see the
complete code for this
                     */


            int tail;
            unsigned int board_clock_reg_new;

            /* do not run sync if history is not full , skip first runs
*/
            if(sync_board_run_first>0) { sync_board_run_first--; return
0; }


            #if TRC_HULL
                convHullTrc(&convHull);
            #endif
```

```
                /* run the algorithem */
            convHullSimplex(&convHull, seq_nr, &pt);
                    /* return  the result of the algorithem */
                return (int)pt.dy/pt.dx;
        }
        return 0;
    }


/* @@@@@@@@@@@@@@@@@@@@@@@@@@@ MAIN @@@@@@@@@@@@@@@@@@@@@@@@@@@@@@@@ */
int main() {
        int result;
        unsigned int sample;
        double send_time=0;
        double recv_time=0;
        double delay;
        double uniRandNum;


        /* initialize seed for delay */
        srand(SEED);
        /* mathematical correct result, which should be approximated by the
algorithem */
        printf("math. result would be:   %.1f\n", (double) SEND_INTERVAL /
(1 + SKEW));


        for (sample=0; sample<SAMPLES; sample++) {
            /* calculate delay */
            uniRandNum = ((double) rand()) / RAND_MAX;
            delay = MEAN_DELAY * (-1) * log(uniRandNum); /* expRand */
            /* accumulated sending time */
            send_time += SEND_INTERVAL;
            /* check if packet should be dropped */
            if (floor(uniRandNum*DROP_RATIO) == 0) continue;
            /* calculated reciving time stamp */
            recv_time = (send_time + delay) / (1 + SKEW);

            /* feed test values to the algorithem */
            result = sync_board(sample, (unsigned int) recv_time);
            if (result) printf("Result of simplex:  %10d\n",result);
        }
        return 0;
    }
```

List of reference numerals and symbols

| | |
|---|---|
| 1 | Packet-switched network, metropolitan Gigabit Ethernet |
| 2 | circuit emulation adapter sender, abbreviated by sender |
| 3 | circuit emulation adapter receiver, abbreviated by receiver |
| 6 | lower convex hull |
| 7 | tangent |
| 8 | tangent meeting lower convex hull |
| 9 | Last participating point, base point |
| 10 | TDM network, TDM-Signal source |
| 11 | packets, Ethernet frames |
| 12 | TDM network, TDM-Signal restored |
| 21 | packetizing at constant frequency |
| 22 | sender clock |
| 31 | de-packetizing frames |
| 32 | receiver clock |
| 33 | estimation of frequency |
| 34 | receiver buffer |
| d | difference of receiver and sender time stamp in $\mu$s; also called delay |
| $f_r$ | frequency of receiver clock |
| $f_s$ | frequency of sender clock |
| $h_i$ | initial history size, represented by a fixed number of packets |
| $h_n$ | history size at normal operation, represented by a fixed number of packets |
| m | index, number of packet |
| z | scale for frequency dependence between sender clock and receiver clock |

**List of acronyms and common abbreviations**

| | |
|---|---|
| PBX | Private Branch Exchange |
| CES | Circuit Emulation Service |

TDM     Time Division Multiplexing

L1      linear order

L2      quadratic order

PLL     phase locked loops

**List of cited documents**

[1]     US 6,661,810 B1 Skelly et al.
Assignee: Verzon Laboratories Inc., Waltham, MA (US) «Clock skew estimation and removal»

[2]     WO 2004/014003 A1
Zarlink semiconductor Ltd, Swindon, Wiltshire SN2 2QW (GB)
«Method of and apparatus for recovering a reference clock»

[3]     S. B. Moon, P. Skelly, and D. Towsley, «Estimation and removal of clock skew from network delay measurements», in Proc. of IEEE INFOCOM'99, New York City, NY USA, March 1999, vol. 1, pp. 227--234.

[4]     Vern Paxson, Measurements and Analysis of End-to-End Internet Dynamics, Ph.D. thesis, University of California, Berkeley, 1997.

[5]     IEEE 1588 «A Precision Clock Synchronization Protocol for Networked Measurement and Control Systems» 2002

**Claims**

1.  A method for frequency synchronization between a sender (2) with sender clock (22) and a receiver (3) with a receiver clock (32), where the sender (2) transmits packets (11) to the receiver (3) over a packet-switched network (1), each packet (11) being stamped by the sender clock (22) and the receiver clock (32), where sender clock (22) and receiver clock (32) have a frequency difference which is constant on small time scales and where the minimal transmission delay is constant and defined by the physics of the network; **characterized by** the steps

    A considering a defined history ($h_i$, $h_n$) of sender and receiver time stamp pairs associated with each received packet (11) in corresponding tuples (m, d),
    B segregating the effect of network dynamics on the time stamps stored in the tuples (m, d) from the effects of frequency difference of sender clock (22) and receiver clock (32);
    C inferring estimates of the frequency difference for frequency synchronization of sender clock (22) and receiver clock (32) from estimating how of the minimal difference of a packet's (11) receiver and sender time stamps evolve over time.

2.  Method according to claim 1;
    whereas step B a further comprises the steps B21 compute any spline close to the lower convex hull (6) to tuples (m, d); B22 inferring a slope associated with the spline.

3.  Method according to claim 2;
    whereas step C a further comprises
    frequency synchronization is determined by the slope.

4.  Method according to claim 2;
    whereas step C a further comprises
    frequency synchronization is determined by the average slope of spline pieces or the slope of a tangent to the spline.

5.  Method according to one of the claims 2 to 4;
    **characterized in that**

- a further history ($h_n$) is created by shifting in time by a defined number ($h_{diff}$) of new received packets (11) getting a further history ($h_n$) of tuples (m, d) and
- carrying out the steps based on the data of the already determined spline pieces and the tuples (m, d) derived from the new received packets (11).

6.  Method according to claim 1;
    **characterized by**
    steps B and C further comprise the steps
    B61 compute the lower convex hull (6) to tuples (n, d),
    B62 calculate the tangent (7) to the lower convex hull (6) that minimizes the sum of the distances between tangent (7) and tuples (n, d) in the history ($h_i$, $h_n$);
    C61 frequency synchronization is determined by slope of tangent (7).

7.  Method according to claim 6;
    **characterized in that**

    - a further history ($h_n$) is created by shifting in time by a defined number ($h_{diff}$) of new received packets (11) getting a further history ($h_n$) of tuples (m, d) and
    - carrying out step B61 and B62, based on the data of the already determined hull and the tuples (m, d) derived from the new received packets (11).

Fig 1

**Fig 2**

EP 1 785 802 A1

**Fig 3**

EP 1 785 802 A1

EP 1 785 802 A1

µs   d

500
450
400
350
300
250
200
150
100
50
0

$h_i$

6   8

7

0   2000   4000   6000   8000   10000   m

**Fig 4**

Fig 5

Fig 6

EP 1 785 802 A1

**European Patent Office**

**EUROPEAN SEARCH REPORT**

Application Number

EP 05 02 4534

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/120416 A1 (LIU ZHEN ET AL) 29 August 2002 (2002-08-29) <br> * paragraph [0003] * <br> * paragraph [0006] * <br> * paragraph [0010] * <br> * paragraph [0033] * <br> * paragraph [0036] * <br> * paragraph [0034] * <br> * paragraph [0038] * <br> * paragraph [0039] * <br> * paragraph [0042] * <br> * paragraph [0054] - paragraph [0058] * <br> * claims 1-9 * <br> * figures 1,4A,6-9 * <br> ----- | 1-7 | G06F1/10 <br> H04J3/06 |
| X | US 2002/188881 A1 (LIU ZHEN ET AL) 12 December 2002 (2002-12-12) <br> * paragraph [0003] - paragraph [0006] * <br> * paragraph [0008] * <br> * paragraph [0032] - paragraph [0034] * <br> * paragraph [0038] * <br> * paragraph [0169] * <br> * paragraph [0172] * <br> * figures 1,4A * <br> ----- | 1-7 | |
| X | US 6 661 810 B1 (SKELLY PAUL ET AL) 9 December 2003 (2003-12-09) <br> * paragraph [0001] * <br> * paragraph [0011] * <br> * paragraph [0012] * <br> * paragraph [0060] * <br> * paragraph [0061] * <br> * paragraph [0065] - paragraph [0076] * <br> * claim 1 * <br> * figures 5,7B,8,10,11 * <br> ----- <br> -/-- | 1-4,6 | TECHNICAL FIELDS SEARCHED (IPC) <br><br> H04J <br> G06F |

The present search report has been drawn up for all claims

| Place of search | Date of completion of the search | Examiner |
|---|---|---|
| The Hague | 31 January 2006 | Marongiu, M.T. |

EPO FORM 1503 03.82 (P04C01)

# EP 1 785 802 A1

**European Patent Office**

## EUROPEAN SEARCH REPORT

Application Number

EP 05 02 4534

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | US 2005/041692 A1 (KALLSTENIUS THOMAS) 24 February 2005 (2005-02-24)<br>* column 5, line 4 - line 28 *<br>* column 5, line 56 - line 67 *<br>* column 7, line 7 - line 11 *<br>* column 7, line 21 - line 31 *<br>* column 7, line 58 - line 67 *<br>* column 9, line 2 - line 6 *<br>* column 9, line 16 - line 26 *<br>* figures 4,5,7 *<br>----- | 1-7 | |

**TECHNICAL FIELDS SEARCHED (IPC)**

The present search report has been drawn up for all claims

| Place of search | Date of completion of the search | Examiner |
|---|---|---|
| The Hague | 31 January 2006 | Marongiu, M.T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 02 4534

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2006

| Patent document cited in search report | | | Publication date | Patent family member(s) | | Publication date |
|---|---|---|---|---|---|---|
| US 2002120416 | A1 | | 29-08-2002 | US | 2002188881 A1 | 12-12-2002 |
| US 2002188881 | A1 | | 12-12-2002 | US | 2002120416 A1 | 29-08-2002 |
| US 6661810 | B1 | | 09-12-2003 | NONE | | |
| US 2005041692 | A1 | | 24-02-2005 | WO | 2005020486 A1 | 03-03-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2004014003 A1
- US 6551810 B1
- US 6661810 B1, Skelly

### Non-patent literature cited in the description

- Estimation and removal of clock skew from network delay measurements. **S. B. MOON ; P. SKELLY ; D. TOWSLEY.** Proc. of IEEE INFOCOM'99. March 1999, vol. 1, 227-234
- Measurements and Analysis of End-to-End Internet Dynamics. **VERN PAXSON.** Ph.D. thesis. 1997
- A Precision Clock Synchronization Protocol for Networked Measurement and Control Systems. *IEEE 1588,* 2002